(19) **Europäisches Patentamt / European Patent Office / Office européen des brevets**

(11) **EP 4 764 856 A1**

(12) **EUROPEAN PATENT APPLICATION**

(43) Date of publication:
24.06.2026 Bulletin 2026/26

(21) Application number: 24425061.9

(22) Date of filing: 19.12.2024

(51) International Patent Classification (IPC):
*G06F 9/50* (2006.01)

(52) Cooperative Patent Classification (CPC):
**G06F 9/5094; G06F 9/4893; G06F 9/505;
G06F 9/5066; G06F 9/5083;** G06F 2209/5017;
G06F 2209/506; G06F 2209/508; G06F 2209/509

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Luxottica S.r.l.**
**32021 Agordo (BL) (IT)**

(72) Inventors:
- **Ardagna, Danilo**
  **20133 Milano (MI) (IT)**
- **Filippini, Federica**
  **20133 Milano (MI) (IT)**
- **Kambale, Abednego Wamuhindo**
  **20133 Milano (MI) (IT)**
- **Ongarello, Tommaso**
  **32021 Agordo (BL) (IT)**
- **Palermo, Francesca**
  **32021 Agordo (BL) (IT)**
- **Sedghani, Hamta**
  **20133 Milano (MI) (IT)**
- **Trojaniello, Diana**
  **32021 Agordo (BL) (IT)**

(74) Representative: **Biallo, Dario et al**
**Barzanò & Zanardo S.p.A.**
**Via Borgonuovo, 10**
**20121 Milano (IT)**

(54) **PROCESSING SYSTEM FOR EXECUTING AN ARTIFICIAL INTELLIGENCE APPLICATION**

(57) Processing system (100) for executing an artificial intelligence or AI application comprising: a wearable device (110) comprising a first electronic unit (111) and a first battery (112); an electronic mobile terminal (120) connected to the wearable device (110) through a wireless connection (140), said electronic mobile terminal (120) comprising a second electronic unit 121 and a second battery (122); a cloud or edge server (130) connected to the electronic mobile terminal (120) through a telecommunications network (150), said server (130) comprising a third electronic unit 121; wherein the processing system is configured so that, at the first request of execution of the AI application, the AI application is executed by the first electronic unit (111), the second electronic unit (121) and the third electronic unit (131) according to a first predefined computational load distribution, and wherein the second electronic unit (121) is programmed for executing, after the first execution of the AI application, a Reinforcement Learning (RL) agent configured for determining at least one second distribution of the computational load on the basis of wearable device state data, electronic mobile terminal state data, server state data, wireless connection state and telecommunication network state data so as to minimize the energy consumption of the first battery maintaining an end-to-end latency smaller than the application time.

Fig. 1

EP 4 764 856 A1

**Description**

The present invention refers to a processing system for executing an artificial intelligence application.

In recent years, Artificial Intelligence (AI) has gained popularity across many fields, enabling the integration of interesting functionalities in various applications. Both academia and industry use AI and extended reality technology to offer users new ways to perceive their environments. Usually, these applications imply executing AI models involving, in many cases, large Deep Neural Networks (DNN). On the other hand, smart device manufacturers have been enhancing the computational and memory capabilities of edge and embedded devices (e.g., smartglasses, smartphones) to enable the execution of AI models. However, significant challenges persist concerning computational power and battery capacity when running complex AI models. Moreover, many applications aim to provide real-time processing, making resource and time constraints critical factors that significantly impact the user experience. Consequently, processing the entire DNN on the device often becomes impractical.

In the present disclosure the expression "AI application" indicates a software involving the execution of an AI algorithm like for example a DNN.

Several studies have tackled these problems by relying on DNN optimization techniques such as quantization, model compression, and knowledge distillation. These techniques can enable the running of the entire DNN on the device but can sometimes lead to a loss in model accuracy. Studies have proposed DNN partitioning to address resources and time constraints challenges. DNN partitioning involves splitting the DNN into different partitions, each suitable for running on different devices. Unfortunately, current solutions mainly focus on a single metric (e.g., energy or latency) and the runtime management is limited to only two devices.

Nowadays wearable device, like for example smart eyewears, smartwatches, a generic head-mountable device and extended reality headsets are emerging applications for this approach.

Head-mountable devices encompass any type of device designed to be worn over at least one eye of a wearer and configured to be mounted on a head, including any eyewear.

The wearable devices usually comprise one or more sensors for detecting environmental parameters, like for example temperature and humidity, and a microcontroller capable of processing the detected parameters and executing software applications.

Such a processing may involve the execution of an AI application comprising for example a DNN.

In this application scenario, it is essential to maintain low the power consumption of such a microcontroller that is however a requirement in conflict with the high computational capability above cited.

For this reason, it is known that wearable devices gather data from their surroundings, for example through suitable sensors, process said data by running a partition of the DNN locally, and offload the remaining computation to a mobile phone and/or to a cloud or edge server. In this case, the wearable device, the mobile phone and the cloud or edge server form a processing system, wherein the wearable device is generally connected to the mobile phone through a wireless connection and the mobile phone is generally connected to the cloud or edge server through a telecommunication network like a 5G network.

The data transmission between different entities involves the use of different network domains. On one hand, the mobile phone uses a 5G network to communicate with the cloud or edge server, on the other hand, the wearable device uses a Wi-Fi network to communicate with the mobile phone. As previously mentioned, Wi-Fi systems can experience interference when multiple devices operate on the same frequency. This interference is caused by overlapping signals and transmissions, leading to reduced quality and reliability of the wireless connection. This problem is exacerbated in 5G systems where next generation millimeter-wave technology, while promising higher transmission rates, is also characterized by larger variance. Consequently, communication may be subject to fluctuations and disruptions that affect network throughput.

Furthermore, cloud or edge servers need to handle many incoming requests. Often, they might experience workload fluctuations, resulting in performance variability. These fluctuations affect server queuing times and, consequently, the end-to-end latency of AI applications. The computational load of the AI application execution may be distributed among the wearable device, the mobile phone and the cloud or edge server in order to ensure system constraints and improve user experience. In this case the AI application is divided in three partitions by means of so-called partition points, wherein each part is intended to be executed by the wearable device, the mobile phone and the cloud or edge server respectively. The partition points determine the configuration of the computational load between the components of the processing system.

Considering different configurations for the same AI application with various partition points, the challenge lies in determining the most appropriate configuration to use in real-time. The selected configuration must ensure a satisfying user experience while adapting to fluctuations in communication conditions and server latency.

The object of the present invention is to overcome the above-mentioned drawbacks and in particular to devise a processing system for executing an artificial intelligence application optimizing the energy consumption while maintaining end-to-end latency at levels that guarantee a satisfactory user experience.

This and other objects according to the present invention are achieved by making a processing system for executing an artificial intelligence application system according to claims 1.

Further characteristics of the processing system for executing an artificial intelligence application are the objects of the dependent claims.

The characteristics and advantages of the processing system for executing an artificial intelligence application according to the present invention will be more evident from the following exemplary though nonlimiting description, referring to the attached schematic drawings in which:

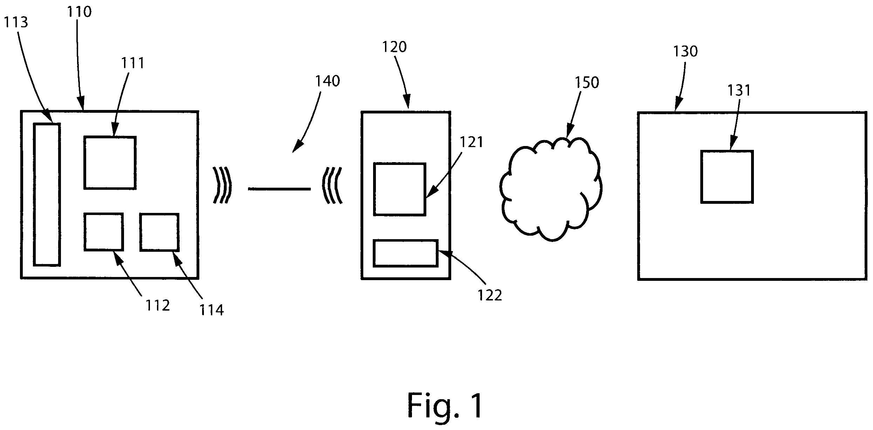

- Figures 1 is a block scheme of an embodiment of a processing system according to the present invention;

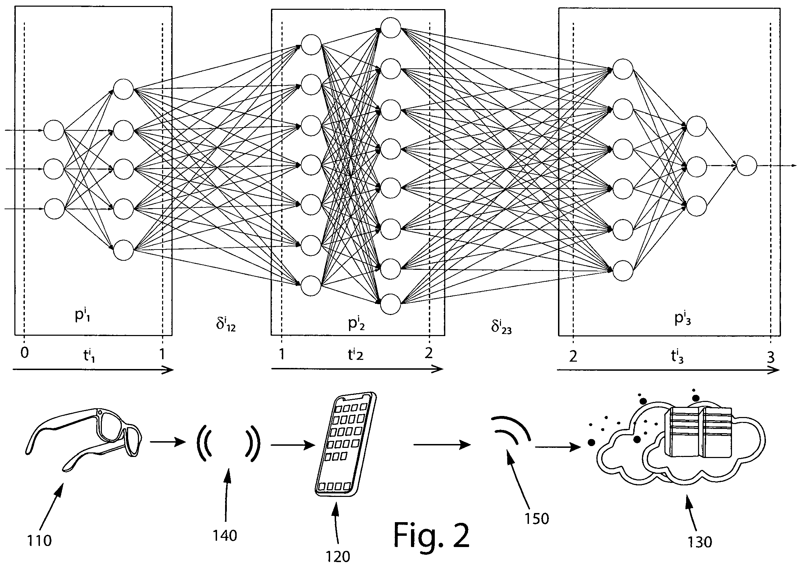

- Figure 2 is a representation of an example of an operating scenario of the processing system of figure 1;
- Figure 3a-3f are schematic representations of six computational load configurations used in the processing system according to the invention.

With reference to the figures, a processing system for executing an artificial intelligence (AI) application at an execution rate is shown, globally referred to as 100. The AI application is a computer program or software intended to be executed in an application time $L_{max}$. The application time is a predefined requirement of the application and corresponds to the time duration that guarantees a satisfactory user experience. The execution rate is related to the application time and is equal to about $1/L_{max}$.

The processing system 100 comprises a wearable device 110, an electronic mobile terminal 120 connected to the wearable device 110 through a wireless connection 140, and a cloud or edge server 130 connected to the electronic mobile terminal 120 through a telecommunications network 150.

For example, the wearable device 100 may be an eyewear, a generic head-mountable device, a smartwatch and so on. Head-mountable devices encompass any type of device designed to be worn over at least one eye of a wearer, wherein the device is configured to be mounted on a head, including any eyewear.

For example, the head-mountable device may be a helmet, or a visor, or a mask or an eyewear and so on.

In particular, in the illustrated figures the wearable device 100 is an eyewear.

For example, the electronic mobile terminal 120 may be a smartphone or a tablet or a laptop and so on.

For example, the wireless connection 140 may be point-to-point connection like as a Wi-Fi connection, for example according to the WiFi7 standard, or a Bluetooth connection and so on.

For example, the telecommunications network 150 may be a network for a fee like a 5G network or a 4G network and so on.

The AI application, for example, comprises a DNN in its turn comprising a plurality of AI tasks, including object classification, object detection, object tracking, and so on.

For example, the AI application is a vision application or a Simultaneous Localization and Mapping (SLAM) application and so on.

The AI application is configured to be divided into a plurality of partitions that can be executed by different processing devices.

In order to ensure a positive user experience, it is necessary to match some time constraints on AI application execution. For example, a SLAM application requires a frame rate within the range of 15-30 frames per second (fps), implying that the total application time $L_{max}$ should be approximately 33-66 ms.

For tracking applications, it is crucial to maintain a minimum application frame rate of 30 fps, translating to an end-to-end application time of less than 33 ms.

For low-frame rate videos, a rate of 1-5 fps (200-1,000 ms) is acceptable.

In any case, the AI application is executed continuously with an execution rate of about $1/L_{max}$. If the execution time is greater than the application time $L_{max}$ the execution rate is less than $1/L_{max}$. Then it is important that the execution time does not exceed the application time $L_{max}$. For example, for SLAM application the AI application execution rate must be equalto the frame rate to be processed.

In the following the references to the cloud server have to be intended as applied also to the edge server.

The wearable device 110, the electronic mobile terminal 120 and the cloud server 130 comprise a first electronic unit 111, a second electronic unit 121, and a third electronic unit 131 respectively wherein each one of such electronic units 111, 121, 131, is configured for executing at least a partition of an AI application.

In this description, with the term "electronic unit" it is intended to indicate at least a processing unit, like a microprocessor, a neural processing unit, a graphic processing unit or even a processing and control unit like a microcontroller.

The wearable device 110 may comprise also a data acquisition system connected to the first electronic unit 111 and configured to acquire first input data intended to be processed by the AI application.

The data acquisition system may comprise one or more sensors 112 for detecting environmental parameters or movement parameters and one or more cameras 114 for acquiring data including images and/or videos.

Moreover, the wearable device 110 comprises a first battery 113 to power supply all the electronic components included therein, that are the data acquisition system and the first electronic unit 111.

Also, the electronic mobile terminal 120 comprises a second battery 122 to power supply all the electronic components included therein.

The AI application is intended to process the data detected by the sensors 112 or acquired by the cameras 114; these data will be indicated in the following as first input data.

When the AI application is divided in three partitions the following operations occur:

- the first electronic unit 111 executes the first partition of the AI application on the basis of a part of the first input data and sends second input data to the electronic mobile terminal 120, wherein the second input data comprise the result of the execution of the first partition of the AI application and the not used first input data;
- the second electronic unit 121 executes the second partition of the AI application on the basis of the second input data and sends third input data to the cloud server 130, wherein the third input data comprise the result of the execution of the second partition of the AI application and the not used second input data;
- the third electronic unit 121 executes the third partition of the AI application on the basis of the third input data received by the electronic mobile terminal 120 and sends the result of the execution of the third partition of the AI application to the electronic mobile terminal that then forwards the result to the wearable device 110.

The execution scheme above illustrated may be applied also to the case in which the AI application is divided in just two partitions; in this case one of the three processing device is not operating.

In any case, the transmission of the result from the last processing device to the wearable device 110 is called final download. The final download is carried out by transmitting the result from the cloud server 130 to the electronic mobile terminal 120 through the telecommunication network and from the electronic mobile terminal 120 to the wearable device 110 through the wireless connection.

The wearable device 110, the electronic mobile terminal 120 and the cloud server 130 are all configured to transmit between each other the input data.

Moreover, the wearable device 110 is configured for transmitting wearable device state data to the electronic mobile terminal 120.

The wearable device state data comprise data indicating the state of the charge of the first battery 113 and the computational load of the first electronic unit 111. The

electronic mobile terminal 120 is also configured for collecting the wearable device state data, cloud server state data, electronic mobile terminal state data, wireless connection state data, and telecommunication network state data. The cloud server state data comprise data indicating the execution time of the respective partition of the AI application at the preceding request; such an execution time is a parameter from which the computational load of the third electronic unit 131 may be inferred.

The electronic mobile terminal state data comprise data indicating the charge level of the second battery 122 and the execution time of the respective partition of the AI application at the preceding request; such an execution time is a parameter from which the computational load of the second electronic unit 121 may be inferred. The wireless connection state data and the telecommunication network state data comprise data indicating the occupancy of the bandwidth of the wireless connection and of the telecommunication network respectively. The wireless connection state data and the telecommunication network state data are, in particular, determined by the second electronic unit of the electronic mobile terminal on the basis of the transmission rates of such connections derived by the data packets flow.

The state data and input data collection are executed by the electronic mobile terminal 120 periodically with a control period $\tau$, for example 5s.

The processing system is configured so that, at the first execution of the AI application, such an AI application is is executed by the first electronic unit (111), the second electronic unit (121) and the third electronic unit (131) according to a first predefined computational load distribution. In particular, the AI application is divided in three partitions according to a first predefined computational load distribution, wherein the first partition is executed by the first electronic unit 111, the second partition is executed by the second electronic unit 121 and the third partition is executed by the third electronic unit 131.

For example, the first predefined computational load distribution provides a distribution of the computational load in equal parts among the three different electronic units.

Advantageously, the second electronic unit 121 is programmed for executing, after the first execution of the AI application, a Reinforcement Learning (RL) agent configured for determining at least one second distribution of the computational load of the AI application among the first electronic unit 111, the second electronic unit 121 and the third electronic unit 131 on the basis of the wearable device state data, the electronic mobile terminal state data, the cloud server state data, wireless connection state and telecommunication network state data so as to minimize the energy consumption of the first battery maintaining an end-to-end latency smaller than the application time. The RL agent is a software module based on an AI algorithm. The execution of the RL agent is initially periodic with a period equal to the control period τ.

Preferably, the second electronic unit 121 is configured for recording the execution time of the AI application and comparing it with the application time; if the execution time is greater than the application time the second electronic unit 121 records a violation. The second electronic unit 121 is also configured for immediately executing the RL agent if the number of consecutive violations exceeds a predefined threshold value. In this case the RL agent is then executed on demand without respecting the control period τ.

The determination of the at least one second distribution of the computational load of the AI application comprises the steps of determining two partition points and consequently of dividing the AI application into three partitions by means of the determined partition points wherein the first partition is intended to be executed by the first electronic unit 111, the second partition is intended to be executed by the second electronic unit 121 and the third partition is intended to be executed by the third electronic unit 131.

The first electronic unit 111, the second electronic unit 121 and the third electronic unit 131 are then programmed for executing the AI application according to the at least one second distribution of the computational load determined by the RL agent. Each distribution of computational load is also called as computational load configuration.

Preferably, the determination of the at least one second distribution of the computational load is carried out so as to minimize also the second battery power consumption. Preferably, the determination of the at least one second distribution of the computational load is carried out so as to minimize also the costs related to the use of the telecommunication network 150 and or the electric energy.

The RL agent will be described in the following.

A set of the computing devices of the processing system indices is denoted by D = {1, 2, 3}, so that d = 1 denotes the wearable device 110 and so the first electronic unit 111, d = 2 denotes the electronic mobile terminal 120 and so the second electronic unit 121 and d = 3 denotes the cloud server 130 and so the third electronic unit 131. The set of all candidate computational load configurations is denoted with K. Each element $k^i \in K$ represents a computational load configuration including multiple AI application partitions, defined as $k^i = \left\{ p_d^i \right\}_{d \in D}$ .

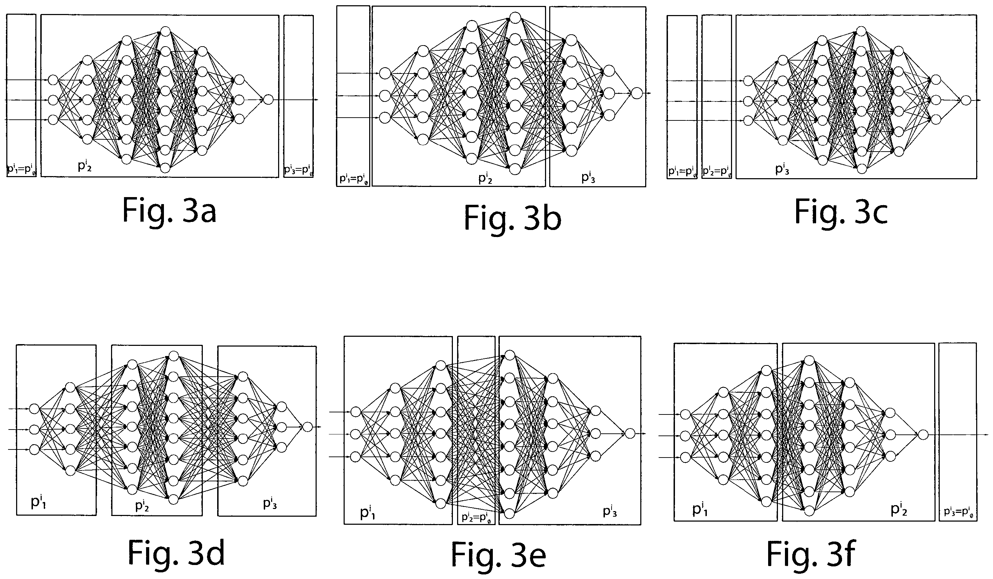

Figures 3a-3f illustrate representative candidate computational load configurations for the AI application. To simplify the modeling and the identification of the partition that is executed on a specific device, three partitions for all the computational load configurations $k^i$ are considered and a new partition $p_0^i$ is introduced for indicating that nothing is executed. In this way, it is possible to characterize a priori, which partition runs on which device, and, therefore, establish a one-to-one correspondence between a partition and a device.

Indeed, for each configuration $k^i$, the first partition $p_1^i$ is always executed on the wearable device 110, the second partition $p_2^i$ on the electronic mobile terminal 120, and the third partition $p_3^i$ on the cloud server 130. Figures 3a and 3c show the case of one partition, meaning that the entire AI application is fully executed on the electronic mobile terminal 120 or on the cloud server 130, respectively. Figures 3b, 3e and 3f represent the case of two partitions, which run respectively on the electronic mobile terminal 120 and on cloud server 130, on the wearable device 110 and on the cloud server 130 or on the wearable device 110 and on the electronic mobile terminal 120, while the third computational component remains idle. Finally, Figure 3d illustrates the case of three partitions, executed by all three components. Throughout the AI application execution, the RL agent might switch from one configuration to another; for instance, Figure 3a and Figure 3b might represent the solutions adopted when the wearable device battery level is low. It is assumed that all the partitions fit in the devices' memory since those violating this constraint can be filtered a priori.

The wearable device state data, the electronic mobile terminal state data and the cloud server state data are measured with a period equal to the application time $L_{max}$. Unless differently specified, their value, which may vary from one control time interval to the other, will be considered constant within a specific time window. Then, an apex τ can be added to the parameter name only to mark its relationship with a specific time slot.

It is assumed that the AI application receives input data with a frequency A = $1/L_{max}$.

It is defined $x^i$ as a binary variable that equals 1 if configuration $k^i$ is selected, and it is denoted by |K| the total number of configurations. One single configuration must be chosen in each time slot τ, which can be expressed by the following constraint:

$$\sum_{i=1}^{|K|} x^i = 1$$

When a computing device (one among the wearable device 110, electronic mobile terminal 120 and the cloud server 130) does not run the entire AI application or its last layer, it sends an intermediate tensor to the next component wherein such an intermediate tensor is the result of the executon of the respective partition. Such an intermediate tensor together with the not used input data forms the input data for the following computing device, as previously reported.

With $\delta_{dk}^{i}$ it is denoted the amount of per-request data related to configuration $k^i$ that is sent by partition $p_d^i$ to partition $p_k^i$; the per-request data is the intermediate tensor size in byte.

Thus, $\delta_{12}^{i}$ is the amount of per-request data sent from the wearable device 110 to the electronic mobile terminal 120 and $\delta_{23}^{i}$ from the electronic mobile terminal 120 to the cloud server 130. When everything is executed on the wearable device 110 $\delta_{12}^{i} = \delta_{23}^{i} = 0$, while in case everything is offloaded to the cloud server 130 $\delta_{12}^{i} = \delta_{23}^{i} = \delta_0$, where $\delta_0$ is the size of the input tensor. The input tensor is the first input data to be processed by the system.

For example in the SLAM application the input tensor is a vectorial representation of the raw image acquired by the one or more cameras 114 of the electronic mobile terminal 120.

The parameter $\mu_d^i$, measured in floating point operations, denotes the per-request computational workload of running the partition $p_d^i$. This information can be easily gathered by development frameworks such as the already known PyTorch, TensorFlow, etc. This quantity, as first approximation, determines the energy consumption of the device's computing resources d when running a partition $p_d^i$. Moreover, to each partition $p_d^i$ a partition latency $t_d^i$ is associated, which defines the processing time of partition $p_d^i$ when running on the associated device. This latency can be computed from a partition latency model that predicts the AI application latency on the specific device or by performing a runtime profiling of the AI application.

The network latencies are estimated through the access time T, the bandwidth ϕ and the data size to transfer:

$$l_{network} = \left( T + \frac{data\_size}{\phi} \right)$$

where T and ϕ depend on the network domain we consider (for example WiFi7 or 5G). In particular, $T_{5G}$ depends on the geographic location of the network node that the user wants to access.

Preferably, for simplicity the access time T of the networks used in the processing system may be considered invariant with respect to the time, even though it may sometimes fluctuate due to the solicitation of the network (for instance, if many users are concurrently accessing the network, they may experience an access time greater than the one they would observe when the network is not saturated).

Since information about the network access time and bandwidth are not easily accessible in practical applications, it has been advantageously considered the network throughput that characterizes each domain, denoted as $r_{wireless\_connection}$ and $r_{telecommunications}$ network, respectively.

For example in the following it is referred to the particular case in which the wireless connection is a WiFi7 connection and the telecommunication network is the 5G network, all the arguments and equations related thereabout being applicable to any network. Then it will be considered the case in which $r_{wireless connection} = r_{wiFi7}$ and $r_{telecommunications network} = r_{5G}$. Any parameter with subscript "5G" or "WiFi7" may be replaced with the respective parameter of the network and connection available in the particular processing system. Any argument and equation may be applied to any other network and wireless connection, although in the following we will make reference to WiFi7 and 5G.

The network throughput can be influenced by many factors, among which the network access time, network congestion, and packet loss, and it intervenes in the computation of both the data-transfer time and the energy consumption associated with it. Therefore, the network latencies can be expressed by the following equations:

$$l_{WiFi7} = \frac{data\_size}{r_{WiFi7}}, \quad l_{5G} = \frac{data\_size}{r_{5G}}$$

Note that the WiFi7 throughput may be reduced when two users approach each other due to the interference between their two WiFi hotspots. As already mentioned, the network throughput is measured in each time interval τ. Thus the throughput has to be related with such a time interval and denoted as $r_{WiFi7}^{\tau}$ and $r_{5G}^{\tau}$ for the two network domains.

Since we consider it to be constant within the time period $\tau$, the apex in the rest of the formulation will be dropped.

The data transfer latencies $l_{sp}$ between the wearable device 110 and the electronic mobile terminal 120, and $l_{pc}$ between the electronic mobile terminal 120 and the cloud server 130 are given by:

$$l_{sp} = \frac{\sum_{i=1}^{|K|} \delta_{12}^i x_i}{r_{WiFi7}}, \qquad l_{pc} = \frac{\sum_{i=1}^{|K|} \delta_{23}^i x_i}{r_{5G}}$$

The cost $c_{5G}$ associated with the 5G connection used to offload the computation from the electronic mobile terminal 120 to the cloud server 130 depends on the size $\delta_{23}^i$ of the data sent from the electronic mobile terminal 120 to the cloud server 130 and on a cost g paid to transfer one byte of data. Hence, a time unit cost $c_{5G}$, that is for example a cost per second, can be expressed as:

$$c_{5G} = \sum_{i=1}^{|K|} \Lambda\, g\, \delta_{23}^i x_i$$

On the other hand, the WiFi7 hotspot between the wearable device 110 and the electronic mobile terminal 120 does not require any internet connection, therefore the wireless connection costs has not been considered in this case. However, if the wireless connection involves the use of a pay network the cost of the wireless connection may be considered.

The end-to-end latency comprises different entity execution times, and the data-transfer latency between those entities. Let $l_{wd}$ and $l_p$ be the wearable device 110 and electronic mobile terminal 120 execution times, respectively, which can be expressed as:

$$l_{wd} = \sum_{i=1}^{|K|} t_1^i x_i, \qquad l_p = \sum_{i=1}^{|K|} t_2^i x_i$$

Similarly, a simple cloud server model has been considered in which the latency and its variance are measured in the control time slots with period $\tau$. The total latency on the cloud server 130 is denoted by $l_{cloud}^\tau$ and it can be defined as $l_{cloud}^\tau = f(\lambda^\tau, \sum_{i=1}^{|K|} t_3^i x_i)$, where $\lambda^\tau$ is the (unknown) workload injected in the cloud server 130 in the time slot $\tau$.

Exploiting the information on the data-transfer latencies lsp and lpc, the end-to-end latency is given by: $l_{total} = l_{wd} + l_p + l_{sp} + l_{pc} + l_{cloud}$.

The end-to-end latency represents the execution time of the AI application.

The power consumption of the devices includes four components, namely:

The power consumed by the wearable device 110 and the electronic mobile terminal 120 when running a partition locally, denoted as $e_{exewd}$ and $e_{exep}$ respectively, which consider the CPU and AI neural engine/GPU energy consumption models;

The power consumption of the wireless connection interface (WNI) and of the telecommunication network interface (TNI), for example the 5G network interface (5GI) when uploading the intermediate tensor to the electronic mobile terminal 120 and the cloud server 130, denoted as $e_{wnu}$ and $e_{5gu}$ respectively;

The power consumed by the WNI and 5GI when retrieving the remote execution results denoted as $e_{wnd}$ and $e_{5gd}$ respectively;

The power consumed by the WNI and 5GI when the wearable device 110 and the electronic mobile terminal 120 are in idle state, denoted as $e_{wnidle}$ and $e_{5gidle}$ respectively. The idle state is enabled when the wearable device 110 and the electronic mobile terminal 120 are waiting for the results from the execution of the remote partitions.

The power terms $e_{exewd}$ and $e_{exep}$ can be computed and are given by:

$$e_{exewd} = \sum_{i=1}^{|K|} \Lambda\, z_{wd}\, \mu_1^i x_i$$

$$e_{exep} = \sum_{i=1}^{|K|} \Lambda z_p \mu_2^i x_i$$

where $z_{wd}$ and $z_p$ are the energy consumption for performing one floating point operation on the wearable device 110 and the electronic mobile terminal 120, respectively $\mu_1^i$ and $\mu_2^i$ are the per-request computational workload (in floating point operations) of running the partition $p_1^i$ and $p_2^i$ of configuration $k^i$ on the wearable device 110 and the electronic mobile terminal 120, respectively. When the devices offload all or some parts of the computation, they consume the power $e_{wnu}$ and $e_{5gu}$ to send the intermediate tensor. Let $\theta_{wd}$ and $\theta_p$ denote the power consumption of the wearable device 110 WNI and the electronic mobile terminal 120 5G interface when transmitting data, respectively. The value of $e_{wnu}$ and $e_{5gu}$ are computed as:

$$e_{wnu} = \theta_{wd} l_{sp} = \frac{\sum_{i=1}^{|K|} \Lambda \theta_{wd} \delta_{12}^i x_i}{r_{WiFi7}}$$

$$e_{5gu} = \theta_p l_{pc} = \frac{\sum_{i=1}^{|K|} \Lambda \theta_p \delta_{23}^i x_i}{r_{5G}}$$

The energy of the final download ($e_{wnd}$ and $e_{5gd}$) and the energy consumed while in the idle state ($e_{wnidle}$ and $e_{5gidle}$) may be neglected.

In this case, the total power consumption $e_{wd}$ and $e_p$ can be calculated as: $e_{wd} = e_{exewd} + e_{wnu}$, $e_p = e_{exep} + e_{5gu}$.

The energy consumption in a specific time slot with duration $\tau$ is computed as follows:

$$e_{wd}^{\tau} = e_{wd}\tau, \quad e_p^{\tau} = e_p\tau$$

As previously mentioned, the RL agent periodically determines the computational load configuration depending on the processing system state. This decision problem is considered as the minimization of the total processing cost as follows:

$$\min \left( \alpha \left( e_{wd} + e_p \right) + c_{5g} \right) \tau$$

subject to the following constraints:

$$\sum_{i=1}^{|K|} x^i = 1$$

$$l_{total} < L_{max}$$

$x^i \varepsilon \{0,1\}, \forall i \varepsilon \{1,2,..., |K|\}$

The goal is to minimize the energy consumption and the 5G connection and energy cost. If the transmission costs are not considered the decision problem may be expressed as $\min(\alpha(e_{wd}+e_p))$.

If it is considered just the energy consumption of the wearable device 110 the decision problem may be expressed as $\min(\alpha(e_{wd}))$.

In the objective function above, $\alpha$ denotes the energy unit price (measured in currency/J), and $L_{max}$ is the maximum time latency that guarantees a satisfactory user experience that is the application time. The problem complexity is $O(|K|)$ and can be solved in linear time. What makes the problem difficult is the network fluctuation and the cloud latency which make the parameter of the optimization problem time-varying. RL allows to learn the environment dynamics and the time evolution of such parameters. The presence of multiple terms in objective functions still requires careful optimization, although it is linear in terms of the decision variables.

The decision problem above illustrated has been formulated as a discrete-time infinite-horizon Markov Decision Process (MDP). This can be defined by a 5-tuple $\langle S,A,P,c,\gamma \rangle$, where S represents the infinite set of all the possible states, A(s) denotes the finite set of all possible actions in state s, P(s'|s,a) is the transition probability from a given state s to a state s' given an action a $\varepsilon$ A(s), c(s, a, s') is the immediate cost when an action a is executed in state s and the system transits to state s', and $\gamma \varepsilon$ [0, 1] is a discount factor that adjusts the importance of future costs.

It may also be defined the RL agent state as:

$$s = (r_{WiFi7}, \ r_{5G}, \ l_{wd}, \ l_p, \ l_{cloud}).$$

The RL agent state may comprise less or more parameters with respect to the ones listed above, depending on the required complexity of the reference controlled application.

Among these, the data rates $r_{WiFi7}$ and $r_{5G}$, and the execution time in the cloud server 130 $l_{cloud}$ are exogenous parameters that are not under the agent control. Therefore, their variability is independent on the chosen actions and is simply observed from the environment. Moreover, it is assumed that the electronic mobile terminal 120 works in light-load conditions, i.e., there are no other running tasks that compete for its resources. On the other hand, $l_{wd}$ and $l_p$ change according to the actions, but their value is preset.

An action consists in selecting a configuration $k^i$, thus raising to 1 the corresponding variable $x^i$. Therefore, the number of actions equals the number of configurations |K|. Note that, in some states, the RL agent may choose not to change the configuration selected in the previous time window; this scenario is modelled by introducing an action $\eta$ that represents the do nothing choice. The set of all the possible actions A(s) is hence given by:

$$A(s) = \{a^1, \ a^2, \ . \ . \ . \ , \ a^{|K|}\} \ U \ \{\eta\}$$

where each $a^i$ represents the action of raising to 1 the variable $x^i$, thus selecting configuration $k^i$.

It is associated a cost c(s, a, s') to each triple state-action-next state, which embeds the energy costs $c_{ewd}(s,a)$ $=\alpha_{ewd}$ and $c_{ep}(s,a)=\alpha_{ep}$, the 5G connection cost $c_{5G}(s,a)$, and the penalty $c_{lat}(s,a,s')$ that is paid when violating the maximum latency requirement ($l_{total}<L_{max}$).

In a given time slot, if the RL agent chooses an action different from $\eta$, the system must be reconfigured, which implies some overhead. Therefore, it is introduced a reconfiguration penalty $c_{rcfg}$, defined as $c_{rctg}=1$ if $a\neq\eta$, meaning that it is paid a penalty equal to 1 every time the chosen action is different from $\eta$, 0 otherwise. Similarly, the cost $c_{lat}(s, a, s')$ incurred when the system violates the latency constraint can be simply defined as $c_{lat}(s, a, s')=1$ if $l_{total}>L_{max}$.

The cost c(s, a, s') is given by:

$$c(s,a,s') = \omega_{ewd} \frac{c_{ewd}}{c_{ewd,max}} + \omega_{ep} \frac{c_{ep}}{c_{ep,max}} + \omega_{5G} \frac{c_{5G}}{c_{5G,max}} + \omega_{lat}c_{lat} + \omega_{rcfg}c_{rcfg}$$

where $\omega_{ewd}$, $\omega_{ep}$, $\omega_{5G}$, $\omega_{lat}$ and $\omega_{rcfg}$ are non-negative weights, and they sum up to 1, $C_{ewd,max}$, $C_{ep,max}$ and $C_{5G,max}$ are the normalization parameters for the energy cost on the wearable device 110 and the electronic mobile terminal 120 and the cost of the 5G connection, respectively.

When there is a high battery level, the RL agent should promote the local computation on the wearable device 110, while, when the battery level drops, the RL agent should prioritize the computation offloading to the electronic mobile terminal 120 or the cloud server 130. Preferably, the RL agent is implemented through one of value-based algorithm, policy-based algorithms, and model-based algorithms, Actor-Critic-based algorithms.

Value-based algorithms directly learn the state value or state-action value and act greedily by choosing the best action in the state. They use exploration to understand the environment and converge to optimal or near-optimal solutions. Policy-based algorithms learn a stochastic policy mapping the state and actions. The agent acts by sampling action from the learned policy. Model-based algorithms learn the model of the environment and plan actions according to the learned model. Actor-Critic-based algorithms combine aspects of both policy-based methods (Actor) and value-based methods (Critic). Actor decides which action to take given the current state and updates the policy directly by using the feedback from the critic. Critic evaluates the action taken by the actor by computing a value function, such as the expected reward or value of the state-action pair and provides feedback to the actor on how good or bad the action was. The actor updates its policy based on the critic evaluation to improve the action selection over time. This method benefits from the actor's ability to directly improve policy and the critic role in reducing the variance of policy updates, leading to more stable and efficient learning.

Preferably, the value-based algorithms comprise the following algorithms: DQN (Deep Q Learning), DDQN (Double Deep Q Learning), DQN+ATT (Deep Q Learning with attention), Rainbow.

Preferably, the Actor-Critic-based algorithms comprise the following algorithms: A2C (Advantage Actor Critic), PPO (Proximal Policy Optimization).

More preferably, the RL agent is implemented through an Actor-Critic-based algorithm.

From the description made, the characteristics of the processing system for executing an artificial intelligence application at an execution rate, that are object of the present invention, are clear, as are the relative advantages.

Indeed, the processing system after the first execution of the AI application distributed among its computing devices is capable to modify the computational load distribution for the successive execution so as to optimize the energy consumption, the energy cost and also eventually the transmission cost still assuring the limit of the application time. This allows to adapt the distribution of the computational load on the basis of the particular requirement of the application in terms of application time and of the actual conditions in terms of resource occupancy level of the computing devices.

Finally, it is clear that the processing system for executing an artificial intelligence application at an execution rate thus conceived is susceptible to numerous modifications and variations, all of which are within the scope of the invention; moreover, all the details may be replaced by technically equivalent elements. In practice, the materials used, as well as their dimensions, can be of any type according to the technical requirements.

**Claims**

1. Processing system (100) for executing an artificial intelligence or AI application at an execution rate related to an application time, said processing system comprising:

   - a wearable device (110) comprising a first electronic unit (111) and a first battery (113);
   - an electronic mobile terminal (120) connected to the wearable device (110) through a wireless connection, said electronic mobile terminal (120) comprising a second electronic unit (121) and a second battery (122);
   - a cloud or edge server (130) connected to the electronic mobile terminal (120) through a telecommunications network (150), said server (130) comprising a third electronic unit 121;
   wherein
   - the processing system is configured so that, at the first request of execution of the AI application, the AI application is executed by the first electronic unit (111), the second electronic unit (121) and the third electronic unit (131) according to a first predefined computational load distribution;
   - the second electronic unit (121) is programmed for executing, after the first execution of the AI application, a Reinforcement Learning (RL) agent configured for determining at least one second distribution of the computational load on the basis of wearable device state data, electronic mobile terminal state data, server state data, wireless connection state and telecommunication network state data so as to minimize the energy consumption of the first battery maintaining an end-to-end latency smaller than the application time, the first electronic unit (111), the second electronic unit (121) and the third electronic unit (131) being programmed for executing the AI application according to the at least one second distribution of the computational load.

2. Processing system (100) according to claim 1 wherein the wearable device (110) comprises a data acquisition system connected to the first electronic unit (111) which is configured to acquire first input data intended to be processed by the AI application.

3. Processing system (100) according to claim 1 or 2 wherein the wearable device (110) is configured for transmitting wearable device state data to the electronic mobile terminal (120), the electronic mobile terminal (120) is configured for collecting wearable device state data, server state data, electronic mobile terminal state data, wireless connection state data, and telecommunication network state data, the data collection occurring periodically with a control period $\tau$.

4. Processing system (100) according to one or more of the previous claims wherein the determination of the at least one second distribution of the computational load is carried out so as to minimize also the second battery power consumption.

5. Processing system (100) according to one or more of the previous claims wherein the determination of the at least one second distribution of the computational load is carried out so as to minimize also the costs related to the use of the telecommunication network (150) and of the electric energy.

6. Processing system (100) according to one or more of the previous claims wherein the execution of the RL agent is initially periodic with a period equal to the control period $\tau$.

7. Processing system (100) according to claim 6 wherein the second electronic unit (121) is configured for recording the execution time of the AI application and comparing it with the application time, if the execution time is greater than the application time the second electronic unit (121) recording a violation, the second electronic unit (121) being also configured for immediately executing the RL agent if the number of consecutive violations exceeds a predefined threshold value.

8. Processing system (100) according to one or more of the previous claims wherein the RL agent is implemented through one of value-based algorithms, policy-based algorithms, model-based algorithms, Actor-Critic-based algorithms.

9. Processing system (100) according to claim 8 wherein the value-based algorithms comprise the following algorithms: DQN, DDQN, DQN+ATT, Rainbow and the Actor-Critic-based algorithms comprise the following algorithms: A2C, PPO.

10. Processing system (100) according to claim 9 or 9 wherein the RL agent is implemented through an Actor-Critic-based algorithm.

Fig. 1

Fig. 2

Fig. 3c

Fig. 3b

Fig. 3a

Fig. 3f

Fig. 3e

Fig. 3d

| | Europäisches Patentamt European Patent Office Office européen des brevets | **EUROPEAN SEARCH REPORT** | **Application Number** EP 24 42 5061 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAMBALE ABEDNEGO WAMUHINDO ET AL: "Runtime Management of Artificial Intelligence Applications for Smart Eyewears", PROCEEDINGS OF THE ACM SIGCOMM 2023 CONFERENCE, ACMPUB27, NEW YORK, NY, USA, 4 December 2023 (2023-12-04), pages 1-8, XP059430124, DOI: 10.1145/3603166.3632562 ISBN: 979-8-4007-0256-3 * the whole document *<br>----- | 1-10 | INV. G06F9/50 |
| A | CHENG ZIXUE ET AL: "Just-in-Time Code Offloading for Wearable Computing", IEEE TRANSACTIONS ON EMERGING TOPICS IN COMPUTING, IEEE, USA, vol. 3, no. 1, 1 March 2015 (2015-03-01), pages 74-83, XP011574662, DOI: 10.1109/TETC.2014.2387688 [retrieved on 2015-03-05] * the whole document *<br>----- | 1-10 | |
| A | LI XIAOFENG ET AL: "Online Task Offloading and Resource Allocation in Two-Tier Mobile-Edge Computing Network", 2023 42ND CHINESE CONTROL CONFERENCE (CCC), TECHNICAL COMMITTEE ON CONTROL THEORY, CHINESE ASSOCIATION OF AUTOMATION, 24 July 2023 (2023-07-24), pages 1915-1920, XP034424388, DOI: 10.23919/CCC58697.2023.10240430 [retrieved on 2023-09-18] * the whole document *<br>----- <br> -/-- | 1-10 | TECHNICAL FIELDS SEARCHED (IPC) G06F |

The present search report has been drawn up for all claims

| Place of search | Date of completion of the search | Examiner |
|---|---|---|
| The Hague | 30 June 2025 | Alecu, Mihail |

EPO FORM 1503 03.82 (P04C01)

page 1 of 2

Europäisches
Patentamt

European
Patent Office

Office européen
des brevets

# EUROPEAN SEARCH REPORT

Application Number

EP 24 42 5061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ABDENACER NAOURI ET AL: "Task Offloading for Smart Glasses in Healthcare: Enhancing Detection of Elevated Body Temperature", ARXIV.ORG, CORNELL UNIVERSITY LIBRARY, 201 OLIN LIBRARY CORNELL UNIVERSITY ITHACA, NY 14853, 14 August 2023 (2023-08-14), XP091592667, * the whole document * ----- | 1-10 | |
| A | LI YANG ET AL: "Communication and Computation Cooperation in Wireless Network for Mobile Edge Computing", IEEE ACCESS, vol. 7, 15 August 2019 (2019-08-15), pages 106260-106274, XP011740108, DOI: 10.1109/ACCESS.2019.2933037 [retrieved on 2019-08-12] * the whole document * ----- | 1-10 | |
| A | US 11 427 215 B2 (TOYOTA ENG & MFG NORTH AMERICA [US]) 30 August 2022 (2022-08-30) * the whole document * ----- | 1-10 | TECHNICAL FIELDS SEARCHED (IPC) |

The present search report has been drawn up for all claims

| Place of search | Date of completion of the search | Examiner |
|---|---|---|
| The Hague | 30 June 2025 | Alecu, Mihail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 42 5061

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2025

| Patent document cited in search report | Publication date | Patent family member(s) | Publication date |
|---|---|---|---|
| US 11427215    B2 | 30-08-2022 | NONE | |

For more details about this annex : see Official Journal of the European Patent Office, No. 12/82

EPO FORM P0459